# EUROPEAN PATENT SPECIFICATION

(11) **EP 2 811 211 B1**
(45) Date of publication and mention of the grant of the patent: **26.07.2017**
(21) Application number: 14171328.9
(22) Date of filing: 05.06.2014
(51) Int. Cl.: F16K 25/00, F01D 17/14

(54) **Valve apparatus and method of manufacturing the same**
Ventilvorrichtung und Verfahren zur Herstellung dafür
Dispositif de valve et son procédé de fabrication

(30) Priority: 07.06.2013 JP 2013121235
(43) Date of publication of application: 10.12.2014
(73) Proprietor: Kabushiki Kaisha Toshiba, Minato-ku, Tokyo 105-8001 (JP)
(72) Inventor: Tsuji, Daisuke, Tokyo, 105-8001 (JP); Shindo, Osamu, Tokyo, 105-8001 (JP)
(74) Representative: Henkel, Breuer & Partner

(56) References cited:
- JP-A- S5 986 761
- JP-A- 2008 275 035
- US-A- 3 811 929
- US-A- 4 599 278

## Description

The invention relates generally to a method of manufacturing a valve apparatus. A method of manufacturing a valve apparatus relevant to claims 1 and 2 is known from document US 4 599 278 A.

A steam turbine in a thermal power plant or the like includes various valve apparatuses such as a main steam stop valve, a steam control valve, a steam stop valve, a reheat steam stop valve, an intermediate gate valve, and a turbine bypass valve, to control inflow of steam.

For the valve apparatus, the following configuration is widely known for a combination of materials for a movable member and a stationary member that is in sliding contact with the movable member, for example, a combination of materials for a valve rod and a bushing. That is, for enhanced wear resistance and lengthened service lives of the materials, for example, 12% chromium-containing steel is used as the material for the bushing, and 30 to 50% nickel-containing austenitic heat-resistant alloy is used for the material for the valve rod. Furthermore, as a surface treatment method of these members, nitriding treatment is utilized.

In recent years, every effort has been made to improve the efficiency of thermal power plants, and steam temperature has been progressively increasing to 593°C, to 600°C, and to 610°C. The steam temperature is expected to be 700°C or higher.

On the other hand, in a nitriding process which is applied to contact surfaces between a movable member of a valve apparatus and a stationary member, which is in sliding contact with the valve apparatus, for example, between a valve rod and a bushing, the metal surfaces transition into an active state at high temperatures, and the metal surfaces react with high-temperature steam in an atmosphere, and an oxide film tends to easily form. The formed oxide film causes peeling each time a repetitive opening/closing operation of the valve is performed. Due to sliding movement of the valve rod, peeled portions locally deposit in recesses on the surface, and fill gaps between the valve rod and the bushing, and cause the valve rod to stick. In addition, a nitride layer, which is formed on a contact surface between the valve rod and the bushing, has such properties that the nitride layer is dissolved at about 500°C due to the nitriding treatment temperature and softened. In addition, if the thickness of the nitride layer is very small, the nitride layer is lost, leading to factors causing the valve to malfunction; such as quick progress of wear.

For the purpose of improving this nitriding process, such a technique has been adopted that a cobalt-based hard alloy is formed by performing cladding by welding on the sliding-contact surface of the bushing, etc. which serves as the stationary member. A general cobalt-based hard alloy is an alloy consisting mainly of cobalt, and containing about 30% of chromium and 4 to 15% of tungsten, and is widely known as a material with excellent wear resistance. In addition, since a large amount of cobalt is contained, this alloy also has a good characteristic with respect to oxidation resistance.

However, if such a cobalt-based hard alloy is formed by performing cladding by welding on a sliding-contact surface of a valve rod that serves as a movable member, a non-permissive bending may easily occur during manufacture, since the shape of the valve rod is a long round rod shape. The cause of the occurrence of this bending is that the heat input amount due to the cladding by welding is large. Furthermore, in this case, since the metallic material formed on the sliding-contact surface of the valve rod serving as the movable member is of the same kind as the metallic material formed on the sliding-contact surface of the bushing serving as the stationary member, adhesive wear tends to occur at a time of sliding movement (sliding motion). For example, in the structure of the valve rod and bushing, steam power acts on the valve rod at a time of opening/closing of the valve. Thus, the valve rod is pressed on the inner surface (sliding surface) of the bushing, and the valve rod slides while the surface pressure of the sliding surface is excessively increasing, leading to a state in which adhesive wear tends to easily occur.

Under the circumstances, it is desired to present a technique for suppressing a heat input amount at a time when a cladding portion is formed on a movable member, suppressing the occurrence of adhesive wear on a sliding-contact surface, and improving wear resistance.

In general, according to the invention, there is provided a method of manufacturing a valve apparatus comprising the features of claim 1 or claim 2.

The invention can be more fully understood from the following detailed description when taken in conjunction with the accompanying drawings, in which:
FIG. 1 is a cross-sectional view illustrating a structure example of a valve apparatus using members which are manufactured by a manufacturing method of a first embodiment;
FIG. 2 is a view illustrating the structure of a manufacturing apparatus for forming a cladding portion on a treatment target portion;
FIG. 3A is a cross-sectional view illustrating an example of a concrete manufacturing method of forming a cladding portion on a treatment target portion (Part 1);
FIG. 3B is a cross-sectional view illustrating an example of a concrete manufacturing method of forming a cladding portion on a treatment target portion (Part 2);
FIG. 4A is a cross-sectional view illustrating an example of a concrete manufacturing method of forming a surface layer on a treatment target portion (Part 1);
FIG. 4B is a cross-sectional view illustrating an example of a concrete manufacturing method of forming a surface layer on a treatment target portion (Part 2); and
FIG. 5 is a cross-sectional view illustrating a structure example of a valve apparatus using members which are manufactured by a manufacturing method of a fourth embodiment.

Hereinafter, embodiments will be described with reference to the accompanying drawings.

### (First embodiment)

To begin with, a first embodiment is described.

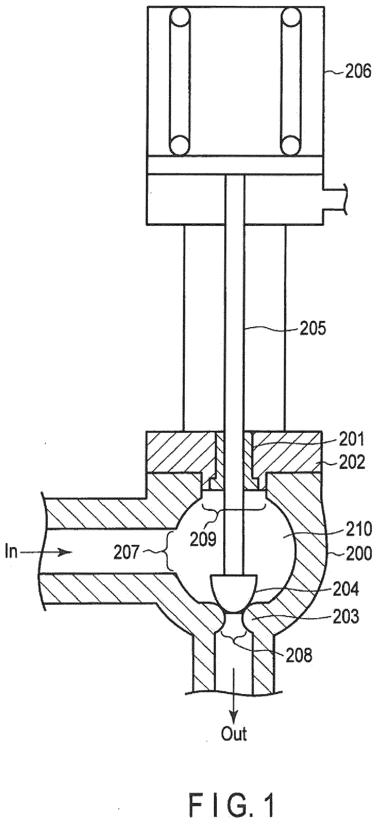

FIG. 1 is a cross-sectional view illustrating a valve apparatus using members which are manufactured by a manufacturing method according to the first embodiment, for example, a steam control valve which is disposed at a front stage of a high-pressure turbine (not shown) and is used in order to control the number of revolutions of the high-pressure turbine by controlling the amount of incoming steam.

The steam control valve includes a steam valve main body 200, a bushing 201, an upper cover 202, a valve seat 203 serving as an outlet of steam, a valve body 204, a valve rod 205, an opening 207 serving as an inlet of steam, an opening 208 serving as an outlet of steam, and an opening 209 serving as an insertion hole of the valve rod 205 and valve body 204. In the steam valve main body 200, the opening 208 of the valve seat 203 is opened/closed by the valve body 204 by the axial-directional movement of the valve rod 205, which is inserted in a steam chest 210 via the opening 209. The upper cover 202 is fixed at an upper part of the opening 209 of the steam valve main body 200, and closes the upper surface of the steam valve main body 200. A hydraulic driving mechanism 206 is disposed above the upper cover 202, and the valve rod 205 is coupled to the hydraulic driving mechanism 206 in a downward direction (vertical direction). The valve rod 205 is configured to be reciprocally moved in an up-and-down direction by the hydraulic driving mechanism 206. In the steam control valve, a through-hole in the upper cover 202 serves as a sliding surface on which the valve rod 205 slides. Thus, the bushing 201 having a cylindrical shape, which is formed by using as a material a metal that has a high wear resistance, is inserted in this part of the through-hole. Thereby, the valve rod 205, which moves in the axial direction, is guided by the bushing 201 so as to prevent side run-out of the valve rod 205. The valve body 204 is provided such that the valve body 204 comes in contact with the valve seat 203 for opening/closing of the opening of the valve seat 203. This valve body 204 is provided at a distal end portion of the valve rod 205.

Taking the valve rod 205 serving as a movable member as an example, a description will now be given of a method of building up a cobalt-based hard alloy with good wear resistance on the sliding-contact surface of the valve rod 205. The sliding surface, in this case, is present on the outer surface of the valve rod 205.

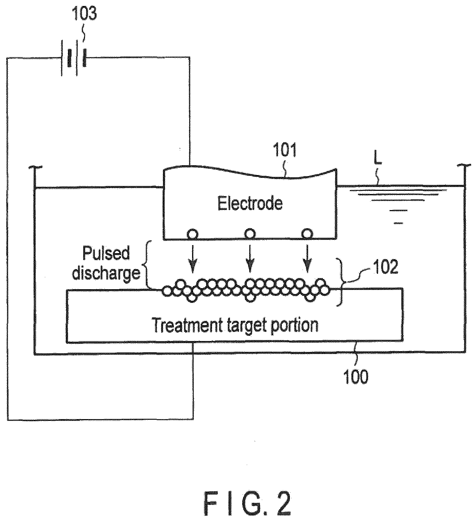

FIG. 2 is a conceptual view illustrating an electric discharge machining method of applying cladding to a treatment target portion.

As illustrated in FIG. 2, an electrode 101 is connected to a cathode of a DC power supply 103 in a liquid L (or gas) with an electrical insulation property, which is provided in an electric discharge machine. In addition, in a state in which a small gap is kept between the electrode 101 and a treatment target portion 100 which is connected to an anode of the DC power supply 103, the application of a voltage of the DC power supply 103 is started or stopped between the electrode 101 and the treatment target portion 100, thereby inducing a pulsed discharge. By the discharge energy of the pulsed discharge, the material of the electrode 101 is welded and deposited on the surface of the treatment target portion 100. The treatment target portion 100, in this context, means a sliding-contact surface for sliding contact of the valve rod 205 or the bushing 201 in FIG. 1. A cladding portion 102 is integrally provided on the sliding-contact surface of at least either the valve rod 205 or the bushing 201. The cladding portion 102 is formed by inducing a pulsed discharge between the electrode, which is formed of a molded body consisting mainly of a metal, and the treatment target portion which is formed of the valve rod 205 or bushing 201, so as to weld and deposit the material of the electrode on the surface of the treatment target portion. As the material of the electrode, a cobalt-based hard alloy was used. A general cobalt-based hard alloy is an alloy which contains cobalt as a main component, and contains about 30% of chromium and 4 to 15% of tungsten. This alloy is widely known as a material with excellent wear resistance. Since this alloy contains a large amount of cobalt, the alloy also has good characteristics with respect to oxidation resistance.

In this electric discharge machining method, the cladding portion is formed by melting the base material of the electrode in units of particles. Thus, since the heat input to the base material of the treatment target portion is small, building-up can be performed without deforming the treatment target portion. Furthermore, since the electrode component blends with and bonds to the treatment target portion, the adhesivity between the cladding portion and the base material of the treatment target portion is high and the cladding portion is not peeled. In addition, since the heat input is small in this electric discharge machining method, no heat-affected zone (HAZ) is formed on the surface layer of the base material of the treatment target portion. In a general welding method, a surface layer portion of about 1 to 3 mm of the base material is formed as a heat-affected zone, causing enlargement of crystal grains which are different from the normal structure of the base material, reheat cracks (SR cracks) due to this at a time of heat treatment, and individual cracks due to residual stress. However, according to the electric discharge machining method of this embodiment, it is possible to prevent formation of a heat-affected zone of the surface layer of the base material due to the heat input, and to manufacture a high-quality product with few defects.

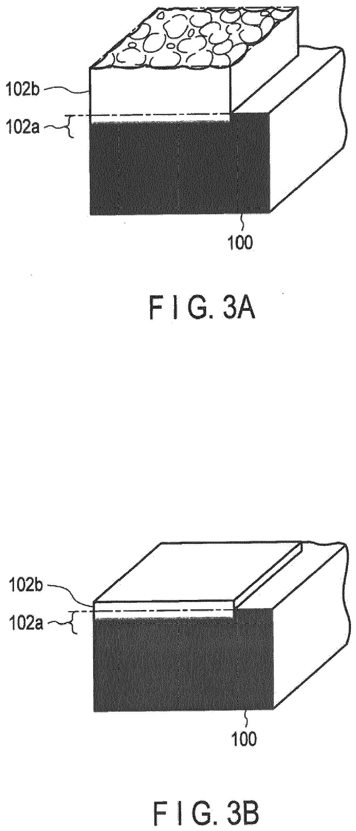

Next, referring to FIG. 3A and FIG. 3B, a description is given of an example of a concrete manufacturing method of forming the cladding portion 102 on the treatment target portion 100.

FIG. 3A illustrates a state in which the cladding portion 102 is formed on the treatment target portion (material) by using the electric discharge machine shown in FIG. 2. The cladding portion 102 formed by the electric discharge machining method includes a penetrant diffusion layer 102a formed by penetration and diffusion of particles of the material of the electrode through the surface of the treatment target portion 100 and a deposit layer 102b formed by welding and deposition of the particles of the material of the electrode 101 on the penetrant diffusion layer 102a.

Since the penetrant diffusion layer 102a is formed by cladding the cobalt-based hard alloy on the treatment target portion 100 by electric discharge machining, a molten portion with a gradient composition, in which the composition ratio varies with a gradient in the thickness direction, is formed. In this case, in order to restrict the heat input amount to the base material by selecting a proper electric discharge condition, the thickness of the penetrant diffusion layer 102a, which becomes the molten portion, should preferably be 20 µm or less and, at minimum, 1 *µ*m or more, and more preferably 5 *µ*m or more. Since the gradient composition including the molten portion becomes a functionally gradient material, the linear expansion coefficients become substantially equal in the vicinity of the boundary in contact with the base material of the treatment target portion 100 and there occurs little difference in linear expansion coefficient, thus the residual stress of the cladding portion 102 can be eliminated. As a result, it is possible to prevent the occurrence of cracks of the cladding portion 102 being applied to the surface of the treatment target portion 100. As regards the deposit layer 102b, there is no restriction on the thickness of the deposit layer 102b due to the adoption of the electric discharge machining, but it is desirable that the thickness of the deposit layer 102b be about 50 *µ*m to 300 *µ*m, in order to effectively exhibit the wear resistance and oxidation resistance of the cobalt-based hard alloy.

In this case, the electrode 101 is a molded electrode which is composed of a molded body formed by compressing a powder consisting mainly of a metal by pressing, or by heat treatment. Alternatively, the electrode 101 may be molded by other publicly known manufacturing methods.

A suitable material of the electrode 101 is a cobalt-based hard alloy or a nickel-based hard alloy, which has thermal shock resistance and oxidation resistance and has a higher hardness than the base material of the treatment target portion. Other examples of suitable materials are fine ceramics materials with good oxidation resistance at high temperatures, such as chromium nitride (CrN), titanium aluminum nitride (TiAlN), titanium tungsten nitride (Ti-w)N, titanium molybdenum nitride (Ti-Mo)C, chromium silicon nitride (CrSiN), and titanium silicon nitride (TiSiN).

An electrode 101 which is molded of a powder of these fine ceramics, or a powder in which this powder and the above-described hard alloy are mixed is also conceivable. However, needless to say, even if novel materials are developed in accordance with a further rise in steam condition in the future, such novel materials are applicable since the cladding portion may become a functionally gradient material according to the electric discharge machining manufacturing method of the present embodiment.

In this case, examples of the material of the valve rod 205, which are selected, are chromium-molybdenum steel, chromium-molybdenum-vanadium steel, chromium-molybdenum-tungsten-vanadium steel, 9% chromium-containing steel, 12% chromium-containing steel, and nickel-based or cobalt-based high-heat-resistant alloys. The material of the valve rod 205 is not limited to these existing materials. Needless to say, even if novel materials are developed in accordance with a further rise in steam condition in the future, the manufacturing method according to the embodiment is applicable.

FIG. 3B shows a state in which, in the cladding portion 102 after building-up, the asperities occurring due to deposition of grains of the electrode on the surface of cladding portion 102 have been finished by machining, for example, by a grinding machine or a polishing machine, so as to have a predetermined shape or dimension and a geometrical tolerance, with a surface roughness (maximum height roughness) Rz being finer than 12.5.

Next, taking as an example the bushing 201 of the stationary member which comes into sliding contact with the valve rod 205 in accordance with the opening/closing operation of the valve, a description is given of a state in which a chromizing process is performed on the sliding-contact surface of the bushing 201. The sliding-contact surface in this case is present on the inner surface of the bushing 201, and the surface that is to be subjected to the chromizing process is present on the inner surface of the bushing 201.

In a metallic cementation which forms an alloy layer by penetration and diffusion of another metal through the surface by making use of a metal diffusion phenomenon such as in a chromizing process, powder containing a metal such as chromium is blended with a metallic treatment target portion, the resultant is heated in a non-oxidizing atmosphere, atoms of, e.g. chromium are infiltrated among atoms of the metallic treatment target portion, and the surface is made into an alloy layer (e.g., an alloy of iron and chromium).

In this case, one kind of infiltrating metal comes into direct contact with the treatment target portion, thereby transferring to the surface of the treatment target portion. Further, there is another kind of infiltrating metal, from which a halogenated metal is produced in a gas phase by a halide which is added in a small amount as an infiltration accelerator, and this halogenated metal is precipitated and fixed on the surface of the treatment target portion and then infiltrated.

In each of these cases, since the metal of the material and the diffusion-infiltrated chromium are integrated as the alloy, no peeling occurs, unlike in plating, and no special processing apparatus is needed, unlike chemical vapor deposition (CVD). In addition, there is a feature that the surface layer can be uniformly processed, without varying the physical properties of the basic metal material in particular.

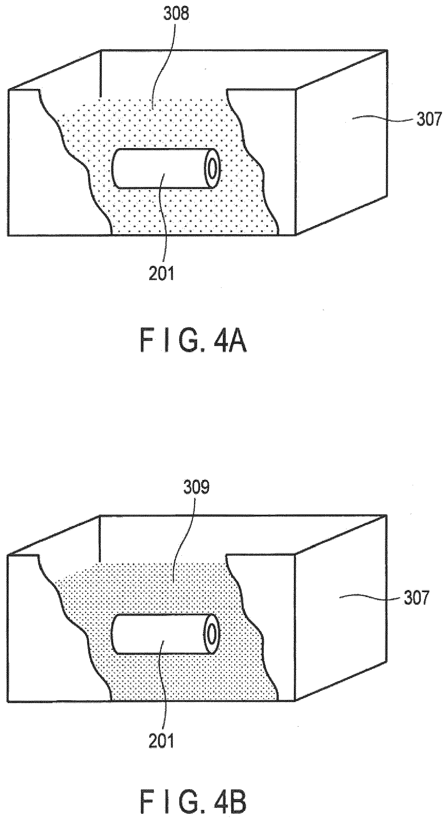

Referring to FIG. 4A and FIG. 4B, an example of a concrete manufacturing method is described.

To begin with, a honing work is performed in order to clean the inner surface of the bushing 201, which serves as a treatment target surface. Then, as illustrated in FIG. 4A, the bushing 201 is buried in a carburizer 308 in a reaction container 307, and the bushing 201 is subjected to heat treatment for a predetermined time at about 1000 to 1200°C, and then subjected to furnace cooling and air cooling. Thereafter, the carburized surface is cleaned, and a process for protection is performed. Thus, the carburization process is completed. Charcoal powder mixed with barium carbonate is used as the carburizer 308. By this process, a carburized layer of about 100 to 200 *µ*m is formed.

Next, a chromizing process is performed. The honing process is performed once again on the bushing 201 on which the carburized layer is formed.
Thereafter, as illustrated in FIG. 4B, the bushing 201 is buried in a packed powder 309 formed of a powder of chromium, aluminum oxide and ammonium chloride, and the bushing 201 is subjected to heat treatment for a predetermined time at about 1050 to 1250°C. The heating atmosphere at this time is an argon gas atmosphere. Then, the inner surface of the bushing 201 is cleaned, and a process for protection is performed. Thus, the chromizing process is completed. By this process, a chromium carbide (CrC) layer of about 20 to 30 *µ*m is formed. Following the chromizing process, as a thermal refining process, quenching is performed at about 1000 to 1200°C in a vacuum atmosphere and a tempering process is performed at about 600 to 800°C.

Finally, a honing work is performed, and finishing is performed to produce a surface roughness (maximum height roughness) Rz, which is finer than 12.5, so as to have a predetermined dimension and a geometrical tolerance. Thus, the series of chromizing process steps is completed.

From the above, as a result of the chromizing process being performed on the bushing 201, a chromium carbide (CrC) layer, which becomes a first coating film, is formed on the inner surface of the bushing 201, which becomes a sliding-contact surface. Like the cobalt-based hard alloy, the chromium carbide (CrC) layer is a coating film with good oxidation resistance and wear resistance. For example, when the material of the bushing 201 is 12Cr steel, a high hardness, such as normal-temperature hardness of 1550HV and high-temperature (600°C) hardness of 1100HV, is maintained even at high temperatures. Thus, when this coating film is applied to the sliding-contact surface, the wear resistance can be improved. In addition, as regards the oxidation resistance characteristic, an oxidation increase amount is very small, and thus the oxidation resistance characteristic of the sliding-contact surface can be improved and the generation of oxidation scale can be prevented under a high-temperature steam condition. In the meantime, since the surface subjected to the chromizing process is very hard and the workability becomes poor, the process is performed on only the sliding-contact surface. In addition, a carburizer is coated on the part which is not subjected to the chromizing process, and consideration needs to be given so as not to cause a reaction at the part other than the sliding-contact surface.

In this case, as the material of the bushing 201, aside from 12% chromium-containing steel, for example, chromium-molybdenum steel, chromium-molybdenum-vanadium steel, chromium-molybdenum-tungsten-vanadium steel, 9% chromium-containing steel, and nickel-based or cobalt-based high-heat-resistant alloys can be used. However, the material of the bushing 201 is not limited to these materials, and it is possible to apply a heat-resistant alloy steel chosen from among ferrite steel, martensitic steel and austenitic steel as the kind of steel. Needless to say, even if novel materials are developed in accordance with a further rise in steam condition in the future, the manufacturing method according to the embodiment is applicable.

Incidentally, the process time in each heat treatment step varies depending on the shape or quality of a material, and the thickness of a coating film made by this series of chromizing processes varies depending on the process time and process temperature.

According to this first embodiment, as regards the movable member, for example, a cobalt-based hard alloy is cladded on the treatment target portion 100 by electric discharge machining. At this time, by selecting a proper electric discharge condition, the heat input amount to the base material can be limited. In addition, since the gradient composition including the molten portion can be made as the functionally gradient material and the linear expansion coefficients can be made substantially equal in the vicinity of the boundary in contact with the base material of the treatment target portion 100, there occurs little difference in linear expansion coefficient, the residual stress of the cladding portion 102 can be eliminated, and it is possible to prevent the occurrence of cracks of the cladding portion 102 applied to the surface of the treatment target portion 100.

On the other hand, as regards the stationary member, for example, by applying a chromizing process, a chromium carbide layer, which serves as a first coating film, is formed on the sliding-contact surface. Thus, like the cobalt-based hard alloy, the chromium carbide layer becomes a coating film with good oxidation resistance and wear resistance, and a high hardness can be maintained even at high temperatures, and the wear resistance can be improved. In addition, as regards the oxidation resistance characteristic, since an oxidation increase amount is very small, the oxidation resistance characteristic of the sliding-contact surface can be improved and the generation of oxidation scale can be prevented under a high-temperature steam condition.

Furthermore, coating films of different kinds of metallic materials are formed on the movable member and the stationary member, and a less adhesive coating film is formed on the movable member by using a material which is less adhesive to the counterpart member and a less adhesive coating film is formed on the stationary member by using a material which is less adhesive to the counterpart member. Thus, by the combination of these coating films, the occurrence of adhesive wear can be suppressed, the wear resistance can be improved, and the durable period can be made longer.

Specifically, in the conventional art, if the kind of metallic material formed on the sliding-contact surface of the valve rod, which serves as the movable member, is the same as the kind of metallic material formed on the sliding-contact surface of the bushing, which serves as the stationary member, adhesive wear tends to occur at a time of sliding movement (sliding motion). For example, in the structure of the valve rod and bushing, steam power acts on the valve rod at a time of opening/closing of the valve. Thus, the valve rod is pressed onto the inner surface (sliding surface) of the bushing, and the valve rod slides while the surface pressure of the sliding surface is excessively increasing, leading to a state in which adhesive wear tends to easily occur. By contrast, according to the present embodiment, different kinds of metallic materials are used for the sliding surfaces of the movable member and the stationary member, and the specific process using the above-described specific materials is performed. Therefore, the occurrence of adhesive wear can be suppressed, the wear resistance can be improved, and the durable period can be made longer.

### (Second embodiment)

A second embodiment is described. A description of the parts common to those in the first embodiment is omitted, and different parts will mainly be described.

In the second embodiment, a titanizing process is performed on the sliding-contact surface of the bushing 201 of the stationary member which is put in sliding contact with the valve rod 205 in accordance with the opening/closing operation of the valve. The sliding-contact surface in this case is present on the inner surface of the bushing 201.

Aside from the chromizing process, there is a titanizing process for diffusing titanium by using the metallic cementation of the first embodiment as a surface-hardening heat treatment process usable even in an environment in which wear tends to occur. Specifically, titanium is infiltrated into the surface for improving wear resistance, thereby forming a titanium carbide (TiC) layer. Titanium is low in specific gravity and is light, and is excellent in mechanical strength and corrosion resistance. Thus, titanium is a suitable material for the surface-hardening heat treatment process.

In the technique of forming this titanium carbide (TiC) layer, the bushing 201 is buried in a processing material including a titanium powder as a main material, and an alumina powder, an ammonium chloride powder, etc., and the bushing 201 is subjected to heat treatment in a reducing gas atmosphere of hydrogen gas, etc. In this technique, chromium, which is used in the chromizing in the first embodiment, is replaced with titanium.

The titanium carbide (TiC) layer has a characteristic of a very high hardness, and is an oxide film with good oxidation resistance and wear resistance, like the chromium carbide (CrC) layer.

According to the second embodiment, the same advantageous effect as in the first embodiment can be obtained.

Needless to say, as the surface-hardening process method of forming the first coating film, a metallic cementation, methods other than the chromizing process and titanizing process as mentioned in the present embodiment are applicable, and even if novel diffusion infiltration techniques using metal diffusion phenomena are developed by technical innovations in the future, such techniques are similarly applicable.

### (Third embodiment)

A third embodiment is described. A description of the parts common to those in the first embodiment is omitted, and different parts will mainly be described.

In the third embodiment, a nickel-based heat-resistant alloy and a cobalt-based heat-resistant alloy, which have high heat resistance even under a high-temperature steam condition and to which oxidation scales adhere less easily, are used as the material of the bushing 201 of the stationary member which is put in sliding contact with the valve rod 205 in accordance with the opening/closing operation of the valve, and a chromizing process is applied to the sliding-contact surface of the bushing 201. The sliding-contact surface in this case is present on the inner surface of the bushing 201. It is widely known that, in general, an alloy material with a high chromium content also has a high oxidation resistance characteristic.

A description will now be given of an example of a manufacturing method according to the third embodiment, which is different from the manufacturing method according to the first embodiment.

The sliding surface of the bushing 201 of the nickel-based heat-resistant alloy or cobalt-based heat-resistant alloy is buried in a packed powder formed of a powder of chromium, aluminum oxide and ammonium chloride, and the bushing 201 is subjected to heat treatment for a predetermined time at about 1050 to 1250°C. Thus, a chromium-rich layer is formed.

Thereafter, the sliding surface of the bushing 201 is heated in atmospheric air at about 1000 to 1100°C and subjected to heat treatment. Thus, a first coating film is formed by a metallic cementation on the surface layer, and grains of Cr₂O₃ (chromium oxide), which have been produced by internal oxidation immediately under the first coating film, are finely diffused.

Then, the first coating film is removed by cutting, polishing, etc., to expose a surface. Thus, an oxide film of Cr₂O₃ (chromium oxide), which becomes a second coating film, is obtained on the sliding surface of the bushing 201.

Cr₂O₃ (chromium oxide) suppresses production of a new oxide (an oxide next to the oxide film) during the operation of the steam turbine equipment, and enables use at higher temperatures or over long periods. Further, since Cr₂O₃ (chromium oxide) has a lubricating property, the slidability can be improved. In addition, since Cr₂O₃ (chromium oxide) is passive and heat-stable, the oxide film of Cr₂O₃ (chromium oxide) is not broken or corroded at high temperatures.

Needless to say, even if a further effective second coating film is developed by changing the material of the packed powder, such a second coating film is similarly applicable, as in the manufacturing method according to the present embodiment.

In this case, as the nickel-based heat-resistant alloy, use is made of an alloy of iron, which consists mainly of nickel, such as a nickel-chromium alloy, a nickel-chromium-iron alloy, or a nickel-chromium-molybdenum alloy. An example of such an alloy is Inconel®. However, the alloy is not limited to such existing materials. Needless to say, even if novel materials are developed in accordance with a further rise in steam condition in the future, the manufacturing method according to the embodiment is applicable.

### (Fourth embodiment)

A fourth embodiment is described. A description of the parts common to those in the first embodiment is omitted, and different parts will mainly be described.

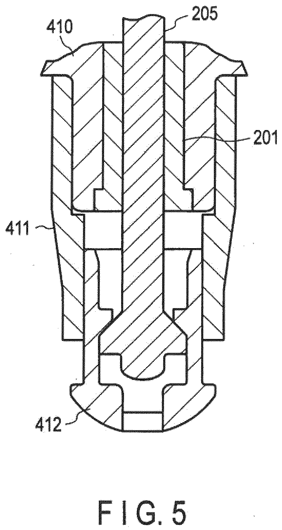

FIG. 5 is a partial cross-sectional view illustrating another structure of the steam control valve shown in FIG. 1, and, in particular, a part in the vicinity of the valve body. Incidentally, since the basic parts of the valve apparatus using members which are manufactured by a manufacturing method according to the fourth embodiment are the same as those in the first embodiment shown in connection with FIG. 1, the parts having the same functions are denoted by like reference numerals, and a description thereof is omitted here. Accordingly, the parts different from those in the first embodiment will mainly be described below.

The steam control valve of FIG. 5 has a function of adjusting a steam flow rate by varying the degree of opening of the valve by axially moving the valve rod 205 and a valve body 412 which moves in interlock with the valve rod 205. In the series of operations, the valve rod 205 moves while being guided by the bushing 201 which is disposed in an upper cover 410, and the valve body 412 moves while being guided by a sleeve 411.

The sleeve 411 is fixed to the upper cover 410 in the steam valve main body 200 (not shown). The valve body 412 is provided so as to come into contact with the valve seat 203 (not shown), and is assembled at a distal end portion of the valve rod 205.

In the first embodiment illustrated in connection with FIG. 1, the valve apparatus includes the valve rod 205 serving as the movable member which operates in accordance with the opening/closing of the valve, and the bushing 201 serving as the stationary member which is in sliding contact with this valve rod 205. On the other hand, in the fourth embodiment, the valve body 412 is applied as the movable member, and the sleeve 411 is applied as the stationary member. Specifically, sliding-contact surfaces are constituted by the outer surface of the valve body 412 and the inner surface of the sleeve 411.

At the sliding part which is constituted by the valve body 412 and sleeve 411, based on the first to third embodiments, a cladding portion is integrally formed on the sliding-contact surface of the valve body which serves the movable member, a surface layer is integrally formed on the sliding-contact surface of the sleeve which serves as the stationary member, and a first coating film and a second coating film are formed in this surface layer.

According to the fourth embodiment, the same advantageous effects as in the first to third embodiments can be obtained.

As has been described above in detail, according to the embodiments, it is possible to suppress a heat input amount at a time when a cladding portion is formed on a movable member, suppress the occurrence of adhesive wear on a sliding-contact surface, and improve wear resistance, so that the durable period can be made longer.

## Claims

1. A method of manufacturing a valve apparatus in which a sliding-contact surface of a movable member and a sliding-contact surface of a stationary member are put in sliding contact with each other in accordance with opening/closing of a valve, the method comprising:
forming a cladding portion (102a, 102b) on the sliding-contact surface of the movable member, by inducing a pulsed discharge between an electrode (101), which is formed of a molded body consisting mainly of a metal, and a treatment target portion (100) of the movable member, in a liquid or a gas with an electrical insulation property, so as to weld and deposit a material of the electrode (101) on a surface of the treatment target portion (100); and
forming a first coating film with an oxidation resistance characteristic and hardness on the sliding-contact surface of the stationary member, through processes in which the stationary member is buried in a carburizer (308) and subjected to heat treatment for a predetermined time, and then the stationary member is buried in a powder (309) including chromium or titanium and subjected to heat treatment for a predetermined time, and thereafter surface-hardening heat treatment using a metallic cementation which includes thermal refining heat treatment and tempering heat treatment is performed.

2. A method of manufacturing a valve apparatus in which a sliding-contact surface of a movable member and a sliding-contact surface of a stationary member are put in sliding contact with each other in accordance with opening/closing of a valve, the method comprising:
forming a cladding portion (102a, 102b) on the sliding-contact surface of the movable member, by inducing a pulsed discharge between an electrode (101), which is formed of a molded body consisting mainly of a metal, and a treatment target portion (100) of the movable member, in a liquid or a gas with an electrical insulation property, so as to weld and deposit a material of the electrode (101) on a surface of the treatment target portion (100);
forming a first coating film on the sliding-contact surface of the stationary member by a metallic cementation, through processes in which the stationary member is buried in a powder (309) including chromium or titanium and subjected to heat treatment for a predetermined time, and then the stationary member is subjected to heat treatment once again; and
after forming the first coating film, obtaining a second coating film on the sliding-contact surface of the stationary member by removing the first coating film by cutting or polishing to expose a surface.

3. The method of manufacturing a valve apparatus according to claim 1, wherein the first coating film of the surface layer of either the bushing (201) or the sleeve (411), which serves as the stationary member, includes at least either a chromium carbide (CrC) layer formed by a chromizing process or a titanium carbide (TiC) layer formed by a titanizing process, and is formed by surface-hardening heat treatment using a metallic cementation.

4. The method of manufacturing a valve apparatus according to claim 2, wherein the first coating film of the surface layer of either the bushing (201) or the sleeve (411), which serves as the stationary member, includes at least either a chromium carbide (CrC) layer formed by a chromizing process or a titanium carbide (TiC) layer formed by a titanizing process, and is formed by surface-hardening heat treatment using a metallic cementation.

5. The method of manufacturing a valve apparatus according to claim 2 or 4, wherein the second coating film of the surface layer of either the bushing (201) or the sleeve (411), which serves as the stationary member, is formed to include at least Cr₂O₃ (chromium oxide).

## Patentansprüche

1. Ein Verfahren zum Herstellen einer Ventilvorrichtung, bei der eine Gleitkontaktfläche eines beweglichen Elements und eine Gleitkontaktfläche eines stationären Elements gemäß einem Öffnen/Schließen eines Ventils in Gleitkontakt miteinander gebracht werden, wobei das Verfahren aufweist:
Ausbilden eines Umhüllungsabschnitts (102a,102b) an der Gleitkontaktfläche des beweglichen Elements durch Herbeiführen einer Impulsentladung zwischen einer Elektrode (101), die aus einem hauptsächlich aus einem Metall bestehenden geformten Körper gebildet ist, und einem Bearbeitungszielabschnitt (100) des beweglichen Elements, in einer Flüssigkeit oder einem Gas mit einer elektrischen Isolationsfähigkeit, derart, dass ein Material der Elektrode (101) auf einer Oberfläche des Bearbeitungszielabschnitts (100) angeschweißt und abgelagert wird, und
Ausbilden eines ersten Beschichtungsfilms mit einer Oxidationswiderstandseigenschaft und einer Härte auf der Gleitkontaktfläche des stationären Elements durch Prozesse, bei denen das stationäre Element in eine Einsatzhärteeinrichtung (308) eingebracht bzw. darin eingebettet wird und einer Wärmebehandlung über eine vorbestimmte Zeit ausgesetzt wird, und dann das stationäre Element in ein Pulver (309) enthaltend Chrom oder Titan eingebracht bzw. eingebettet wird und einer Wärmebehandlung über eine vorbestimmte Zeit ausgesetzt wird, und danach eine Oberflächenhärtungswärmebehandlung unter Verwendung einer metallischen Auflegierung ausgeführt wird, welche eine thermische Veredelungswärmebehandlung und eine Härtungs- oder Vergütungswärmebehandlung umfasst.

2. Ein Verfahren zum Herstellen einer Ventilvorrichtung, bei der eine Gleitkontaktfläche eines beweglichen Elements und eine Gleitkontaktfläche eines stationären Elements gemäß einem Öffnen/Schließen eines Ventils in Gleitkontakt miteinander gebracht werden, mit:
Ausbilden eines Umhüllungsabschnitts (102a,102b) auf der Gleitkontaktfläche des beweglichen Elements durch Herbeiführen einer Impulsentladung zwischen einer Elektrode (101), die aus einem hauptsächlich aus einem Metall bestehenden geformten Körper gebildet ist, und einem Bearbeitungszielabschnitt (101) des beweglichen Elements in einer Flüssigkeit oder einem Gas mit einer elektrischen Isolationseigenschaft, derart, dass ein Material der Elektrode (101) auf eine Oberfläche des Bearbeitungszielabschnitts (100) geschweißt und abgelagert wird,
Ausbilden eines ersten Beschichtungsfilms auf der Gleitkontaktfläche des stationären Elements durch eine metallische Auflegierung über Prozesse, bei denen das stationäre Element in einem Pulver (309) enthaltend Chrom oder Titan eingebracht bzw. eingebettet wird und einer Wärmebehandlung für eine vorbestimmte Zeit ausgesetzt wird, und dann das stationäre Element erneut eine Wärmebehandlung ausgesetzt wird, und
nach dem Ausbilden des ersten Beschichtungsfilms, Erhalten eines zweiten Beschichtungsfilms auf der Gleitkontaktfläche des stationären Elements durch Entfernen des ersten Beschichtungsfilms durch Abtrennen bzw. spanende Bearbeitung oder Polieren zum Freileigen einer Oberfläche.

3. Das Verfahren zum Herstellen einer Ventilvorrichtung gemäß Anspruch 1, wobei der erste Beschichtungsfilm der Oberflächenlage von entweder der Buchse (201) oder der Hülse (411), die als das stationären Element dient, zumindest entweder eine Chromcarbid(CrC)-Lage, die durch einen Chromatierungsprozess gebildet ist, oder eine Titancarbid(TiC)-Lage, die durch einen Titanierungsprozess gebildet ist, aufweist, und durch eine Oberflächenhärtungswärmebehandlung unter Anwendung einer metallischen Auflegierung gebildet wird.

4. Das Verfahren zum Herstellen einer Ventilvorrichtung gemäß Anspruch 2, wobei der erste Beschichtungsfilm der Oberflächenlage von entweder der Buchse (201) oder der Hülse (411), die als das stationäre Element dient, zumindest entweder eine Chromcarbid(CrC)-Lage, die durch einen Chromatierungsprozess gebildet ist, oder eine Titancarbid(TiC)-Lage, die durch einen Titanierungsprozess gebildet ist, aufweist, und durch eine OberflächenhärtungsWärmebehandlung unter Anwendung einer metallischen Auflegierung gebildet wird.

5. Das Verfahren zum Herstellen einer Ventilvorrichtung gemäß Anspruch 2 oder 4, wobei der zweite Beschichtungsfilm der Oberflächenlage von entweder der Buchse (201) oder der Hülse (411), die als das stationäre Element dient, ausgebildet wird, um zumindest Cr₂O₃(Chromoxid) zu enthalten.

## Revendications

1. Procédé de fabrication d'un dispositif de soupape, dans lequel on met en contact glissant l'une avec l'autre, en fonction d'une ouverture/fermeture d'une soupape, une surface à contact glissant d'un élément mobile et une surface à contact glissant d'un élément fixe, le procédé comprenant :
former une partie (102a, 102b) de plaquage sur la surface à contact glissant de l'élément mobile, en induisant une décharge pulsée entre une électrode (101), formée d'un corps moulé consistant principalement en un métal, et une partie (100) cible de traitement de l'élément mobile, dans un liquide ou dans un gaz ayant une propriété d'isolant électrique, de manière à souder et à déposer une matière de l'électrode (101) sur une surface de la partie (100) cible de traitement et
former une première pellicule de revêtement ayant une caractéristique de résistance à l'oxydation et de la dureté, sur la surface à contact glissant de l'élément fixe, par des opérations, dans lesquelles l'élément fixe est enfoui dans un carburisateur (308) et soumis à un traitement thermique pendant un temps déterminé à l'avance, puis l'élément fixe est enfoui dans une poudre (309), comprenant du chrome ou du titane, et est soumis à un traitement thermique pendant un temps déterminé à l'avance et ensuite, on effectue un traitement thermique de durcissement de surface en utilisant une cémentation métallique, qui inclut un traitement thermique d'affinage par la chaleur et un traitement thermique de mise en température.

2. Procédé de fabrication d'un dispositif de soupape, dans lequel on met en contact glissant l'une avec l'autre, en fonction d'une ouverture/fermeture d'une soupape, une surface à contact glissant d'un élément mobile et une surface à contact glissant d'un élément fixe, le procédé comprenant :
former une partie (102a, 102b) de plaquage sur la surface à contact glissant de l'élément mobile, en induisant une décharge pulsée entre une électrode (101), formée d'un corps moulé consistant principalement en un métal, et une partie (100) cible de traitement de l'élément mobile, dans un liquide ou dans un gaz ayant une propriété d'isolant électrique, de manière à souder et à déposer une matière de l'électrode (101) sur une surface de la partie (100) cible de traitement et
former une première pellicule de revêtement ayant une caractéristique de résistance à l'oxydation et de la dureté, sur la surface à contact glissant de l'élément fixe, par des opérations, dans lesquelles l'élément fixe est enfoui dans un carburisateur (308) et soumis à un traitement thermique pendant un temps déterminé à l'avance, puis on soumet l'élément fixe une fois à nouveau à un traitement thermique et,
après avoir formé la première pellicule de revêtement, on obtient une deuxième pellicule de revêtement sur la surface de contact à glissement de l'élément fixe, en éliminant la première pellicule de revêtement, en coupant ou en polissant, pour mettre à nue une surface.

3. Procédé de fabrication d'un dispositif à soupape suivant la revendication 1, dans lequel la première pellicule de revêtement de la couche de surface de la douille (201) et du manchon (411), qui servent d'éléments fixes, comprend au moins une couche de carbure de chrome (CrC), formée par une chromisation, ou une couche de carbure de titane (TiC), formée par une titanisation, et est formée par un traitement thermique de durcissement de surface utilisant une cémentation métallique.

4. Procédé de fabrication d'un dispositif à soupape suivant la revendication 2, dans lequel la première pellicule de revêtement de la couche de surface de la douille (201) ou du manchon (411), qui servent d'éléments fixes, inclut au moins une couche de carbure de chrome (CrC), formée par une chromisation, ou une couche de carbure de titane (TiC), formée par une titanisation, et est formée par un traitement thermique de durcissement de surface utilisant une cémentation métallique.

5. Procédé de fabrication d'un dispositif à soupape suivant la revendication 2 ou 4, dans lequel la deuxième pellicule de revêtement de la couche de surface de la douille (201) ou du manchon (411), qui servent d'éléments fixes, est formée de manière à inclure au moins du Cr₂O₃ (oxyde de chrome).
